# EUROPÄISCHE PATENTSCHRIFT

(11) **EP 1 962 105 B1**
(45) Veröffentlichungstag und Bekanntmachung des Hinweises auf die Patenterteilung: **06.05.2009**
(21) Anmeldenummer: 08003004.2
(22) Anmeldetag: 19.02.2008
(51) Int. Cl.: G01S 7/497

(54) **Verfahren zur Überprüfung der Funktionsweise und/oder Justierung einer optoelektronischen Sensoranordnung und optoelektronische Sensoranordnung**
Method for testing the functionality and/or adjusting an opto-electronic sensor assembly
Procédé de surveillance du type de fonction et/ou d'ajustement d'un système de capteur optoélectronique et système de capteur optoélectronique

(30) Priorität: 22.02.2007 DE 102007009244
(43) Veröffentlichungstag der Anmeldung: 27.08.2008
(73) Patentinhaber: SICK AG, 79183 Waldkirch (DE)
(72) Erfinder: Wüstefeld, Martin, 79350 Sexau (DE)
(74) Vertreter: Modrow, Stephanie

(56) Entgegenhaltungen:
- EP-A- 0 491 118
- EP-A- 0 520 247
- WO-A-03/056526
- DE-A1- 10 055 689
- DE-A1- 19 951 557
- GB-A- 2 274 369

## Beschreibung

Die Erfindung betrifft ein Verfahren zur Überprüfung der Funktionsweise und/oder Justierung einer optoelektronischen Sensoranordnung und eine entsprechend ausgestattete optoelektronische Sensoranordnung.

Bekannt sind optoelektronische Sensoranordnungen mit wenigstens zwei Lichtsendern, denen jeweils ein Lichtempfänger zugeordnet ist, wobei die Lichtempfänger jeweils als ortsauflösende Lichtempfänger ausgebildet sind, und wobei jeweils der Lichtsender und der zugehörige Lichtempfänger derart zueinander angeordnet sind, dass ein von dem Lichtsender ausgesandter Lichtstrahl nach Reflexion an einer Grenzfläche vom zugehörigen Lichtempfänger detektierbar ist. Derartige optoelektronische Sensoranordnungen bilden ein tastendes Lichtgitter, mit welchem ein Schutzbereich überwacht werden kann. In den Lichtempfängern werden positionsproportionale Empfangswerte detektiert, was bedeutet, dass sich der Auftreffpunkt auf dem ortsauflösenden Empfangselement ändert, wenn sich die Entfernung zwischen der Grenzfläche, an welcher der Lichtstrahl reflektiert wird, und der Sensoranordnung ändert. Dieses Prinzip wird auch Triangulationsprinzip genannt.

Aus der DE 41 19 797 C2 ist ein Sicherheitslichttaster bekannt, dessen Lichtempfänger als hochauflösender analoger Positionsdetektor ausgebildet ist und welcher nach dem Triangulationsprinzip arbeitet. Zur flächendeckenden Überwachung eines Gefahrenbereichs kann der dort beschriebene Sicherheitslichttaster durch entsprechende Mehrfachanordnung im jeweils erforderlichen Abstand eingesetzt werden.

Die DE 100 55 689 A1 offenbart ein Triangulationslichtgitter, bei welchem jede Senderabbildung auf der Detektionsfläche von einem Zeilenbildsensor empfangen wird, wobei diese Positionsdaten zur Detektion eines in das Lichtgitter eingedrungenen Objekts mit den Referenzpositionsdaten verglichen werden, um zu überprüfen, ob das Überwachungsfeld frei ist.

Die bekannten Triangulationslichtgitter weisen jedoch das Problem auf, dass Verschiebungen zwischen den Lichtsendern und den Lichtempfängern in der optoelektronischen Sensoranordnung aufgrund von Toleranz zwischen den Bauteilen oder Verschiebungen während der Montage oder gegebenenfalls auftretenden Vibrationen oder Temperaturausdehnungen nicht ermittelt und bei der Funktionsweise der optoelektronischen Sensoranordnung berücksichtigt werden können. Dadurch kann es prinzipiell auftreten, dass nicht bemerkt wird, dass sich ein Lichtsender/Lichtempfängerpaar innerhalb der optoelektronischen Sensoranordnung verschoben hat und die Auflösung des tastenden Lichtgitters dadurch abnimmt, weil ein nicht überwachter Bereich innerhalb des Überwachungsbereichs entsteht.

Als weiterer Stand der Technik werden die DE 199 51 557 A1 und die EP 0 491 118 A2 genannt

Die Aufgabe der Erfindung besteht daher darin, ein Verfahren zur Überprüfung der Funktionsweise und/oder der Justierung einer optoelektronischen Sensoranordnung, mit welchem Verschiebungen der optimalen relativen Position zwischen den Lichtsendern und den entsprechenden Lichtempfängern überprüft werden kann, bereitzustellen. Ferner besteht die Aufgabe der Erfindung darin, eine optoelektronische Sensorordnung bereitzustellen, mit welcher die relative Anordnung zwischen den Bauteilen der Sensoranordnung überprüft werden kann.

Die Aufgabe wird gelöst durch ein Verfahren zur Überprüfung der Funktionsweise und/oder Justierung einer optoelektronischen Sensoranordnung mit den Merkmalen des Patentanspruchs 1 und durch eine optoelektronische Sensoranordnung mit den Merkmalen des Patentanspruchs 6.

Vorteilhafte Ausgestaltungen und Weiterbildungen der Erfindung sind in den Unteransprüchen angegeben.

Das erfindungsgemäße Verfahren beruht darauf, die aktuellen positionsproportionalen Empfangswerte für jedes Lichtsender/Lichtempfängerpaar zu detektieren, die aktuellen relativen Lagen der Empfangswerte jeweils zweier benachbarter Lichtsender/Lichtempfängerpaare zu bestimmen und mit hinterlegten Sollwerten der relativen Lagen zweier benachbarter Lichtsender/Lichtempfängerpaare zu vergleichen. Es wird somit nicht nur der positionsproportionale Empfangswert hinterlegt, sondern dieser in Beziehung zu dem entsprechenden positionsproportionalen Empfangswert des benachbarten Lichtsender/Lichtempfängerpaars gesetzt. Verschiebungen zwischen den verschiedenen Lichtsender/Lichtempfängerpaaren oder auch des Lichtsenders oder des Lichtempfängers innerhalb eines Lichtsender/Lichtempfängerpaares aufgrund von Toleranzen zwischen den Bauteilen, aufgrund von Torsion der optoelektronischen Sensoranordnung während der Montage, aufgrund von Vibration der optoelektronischen Sensoranordnung oder aufgrund von Temperaturausdehnung können somit ermittelt werden, da derartige Verschiebungen bewirken, dass der von einem Lichtsender ausgesandte Lichtstrahl nach Reflexion an einer Grenzfläche auf einer anderen Position des ortsauflösenden Lichtempfängers auftrifft als vorgesehen und somit auch eine Abweichung der relativen Lage zwischen den beiden Auftreffpunkten zweier benachbarter ortsauflösender Lichtempfänger detektiert wird.

Erfindungsgemäß wird ein maximal zulässiger Abstand zwischen den Lichtempfängern und der Grenzfläche ermittelt und hinterlegt. Beispielsweise kann während der Produktion festgestellt werden, ob tatsächlich sämtliche von den Lichtsendern ausgesendeten Lichtstrahlen parallel zueinander verlaufen oder gegebenenfalls einer der Lichtstrahlen im Winkel zu den anderen verläuft. Durch derartige schräg verlaufende Lichtstrahlen verändert sich die maximale Auflösung des tastenden Lichtgitters, da zwischen zwei im Winkel zueinander verlaufenden Lichtstrahlen ein Öffnungswinkel entsteht und bei zu großem Abstand zwischen der optoelektronischen Sensoranordnung und der Grenzfläche Objekte bestimmter Größe in den Zwischenraum zwischen den beiden schräg zueinander verlaufenden Lichtstrahlen eindringen können. Es kann ein maximaler Abstand ermittelt werden, bei welchem auch bei schräg zueinander verlaufenden Lichtstrahlen Objekte einer definierten Größe zuverlässig erkannt werden, welcher vorzugsweise hinterlegt wird, so dass dieser bei der Inbetriebnahme und bei der Überwachung während des Schutzbetriebs in regelmäßigen Abständen überprüft werden kann, um auf diese Weise die Zuverlässigkeit und Sicherheit der optoelektronischen Sensoranordnung zu erhöhen.

Die Sollwerte der relativen Lagen werden für einen definierten Abstand zwischen der optoelektronischen Sensoranordnung bzw. den Lichtsendern und der Grenzfläche vorzugsweise durch folgende Schritte, vorzugsweise während der Produktion der optoelektronischen Sensoranordnung, ermittelt. Es werden die positionsproportionalen Empfangswerte für jeden Lichtsender und den zugehörigen Lichtempfänger für den definierten Abstand zwischen der optoelektronischen Sensoranordnung und der Grenzfläche detektiert und als Sollempfangswerte hinterlegt. Anschließend werden die relaiven Lagen der Empfangswerte jeweils zweier benachbarter Lichtsender bzw. Lichtsender/Lichtempfängerpaare bestimmt und ebenfalls als Sollwerte der relativen Lagen hinterlegt. Werden die Sollwerte der relativen Lagen während der Produktion der optoelektronischen Sensoranordnung ermittelt, kann davon ausgegangen werden, dass in der Produktion die optoelektronische Sensoranordnung exakt justiert und die Lichtsender und Lichtempfänger in einer gewünschten Position relativ zueinander in der optoelektronischen Sensoranordnung festgelegt wurden. Auftretende Torsionen der optoelektronischen Sensoranordnung bei der Montage oder Verschiebungen der Lichtsender und Lichtempfänger beispielsweise während des Transports können somit überprüft werden, sobald die optoelektronische Sensoranordnung wieder in Betrieb genommen wird und die aktuellen positionsproportionalen Empfangswerte und ihre entsprechenden relativen Lagen jeweils zweier benachbarter Lichtsender mit den hinterlegten Sollwerten verglichen werden.

Dabei werden vorzugsweise die Sollwerte der relativen Lagen für mehrere unterschiedliche Abstände zwischen der optoelektronischen Sensoranordnung und der Grenzfläche ermittelt, damit nicht von vorn herein der entsprechende Abstand zwischen der optoelektronischen Sensoranordnung und der Grenzfläche für die spätere Montage gelegt ist.

Besonders bevorzugt wird vor jeder Inbetriebnahme der optoelektronischen Sensoranordnung und/oder regelmäßig während des Betriebs der Vergleich der aktuellen relativen Lagen mit den Sollwerten der relativen Lagen durchgeführt, um ständig eine Kontrolle über gegebenenfalls auftretende Verschiebungen zwischen entsprechenden Bauteilen zu haben.

Die erfindungsgemäße optoelektronische Sensoranordnung weist wenigstens zwei Lichtsender auf, denen jeweils ein Lichtempfänger zugeordnet ist. Dabei sind die Lichtempfänger jeweils als ortsauflösende Lichtempfänger ausgebildet. Jeweils der Lichtsender und der zugehörige Lichtempfänger sind derart zueinander angeordnet, dass ein von dem Lichtsender ausgesandter Lichtstrahl nach Reflexion an einer Grenzfläche vom zugehörigen Lichtempfänger detektierbar ist. Jeweils ein Lichtsender und der zugehörige Lichtempfänger bilden ein Lichtsender/Lichtempfängerpaar. Die optoelektronische Sensoranordnung weist eine Auswerte- und Speichereinheit auf, welche geeignet ist, die aktuellen positionsproportionalen Empfangswerte für jeden Lichtsender und den zugehörigen Lichtempfänger zu detektieren, die aktuellen relativen Lagen der Empfangswerte jeweils zweier benachbarter Lichtsender zu bestimmen und die aktuellen relativen Lagen der Empfangswerte mit in der Auswerte- und Speichereinheit hinterlegten Sollwerten der relativen Lagen zu vergleichen. Dadurch ermöglichst auch die optoelektronische Sensoranordnung eine Überprüfung der Funktionsweise und/oder der Justierung der optoelektronischen Sensoranordnung.

Vorzugsweise senden die Lichtsender einen kollimierten Lichtstrahl aus, damit sichergestellt ist, dass der zugehörige Lichtempfänger im Wesentlichen das von dem entsprechend zugehörigen Lichtsender ausgesendete Licht detektiert.

Besonders bevorzugt senden die Lichtsender Licht im sichtbaren Bereich aus, was einem Benutzer die Ausrichtung vereinfacht und während des Betriebs Personen, die sich dem Schutzbereich nähern, auf den überwachten Schutzbereich hinweist.

Die ortsauflösenden Lichtempfänger sind vorzugsweise als segmentierte Diode oder Pixelarray ausgebildet, um eine besonders hohe Ortsauflösung bereitzustellen.

Bei einer vorteilhaften Ausgestaltung der Erfindung ist eine Steuereinheit vorhanden, welche geeignet ist, die Lichtsender derart anzusteuern, dass die Lichtsender zeitlich versetzt zueinander einen Lichtstrahl aussenden, um nicht jeden Lichtsender kontinuierlich Licht aussenden zu lassen, jedoch weiterhin eine zuverlässige Überwachung des Schutzbereichs zu garantieren.

Die Erfindung wird anhand der nachfolgenden Figuren ausführlich erläutert. Es zeigt
- Figur 1: eine schematische Darstellung einer idealisierten tastenden optoelektronischen Sensoranordnung und
- Figur 2: eine schematische Darstellung einer realen tastenden optoelektronischen Sensoranordnung.

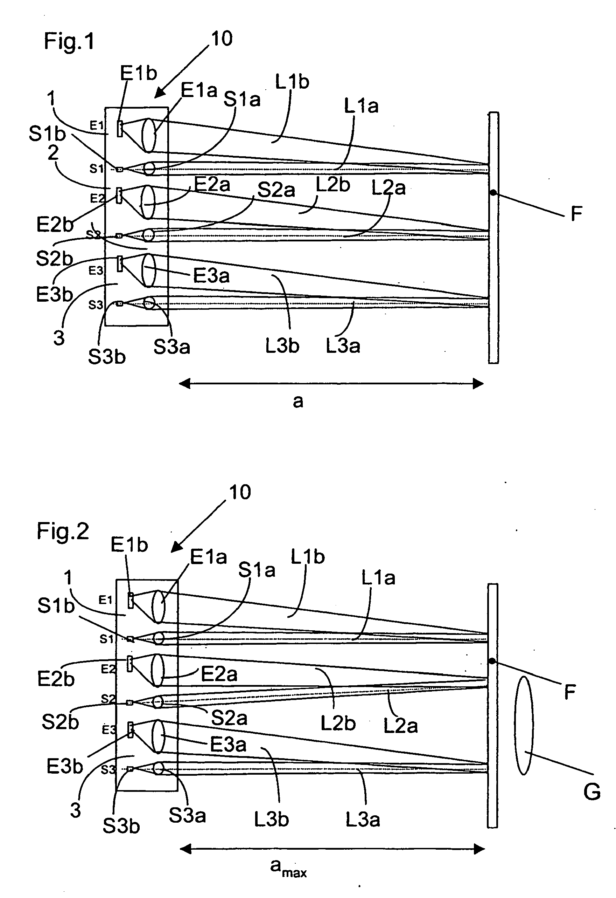

Figur 1 zeigt eine schematische Darstellung einer idealen optoeletronischen Sensoranordnung 10 mit einem ersten Lichtsender S1, einem zweiten Lichtsender S2 und einem dritten Lichtsender S3. Die Lichtsender S1, S2, S3 weisen jeweils ein Sendeelement S1b, S2b, S3b auf, welches hinter einer Optik S1a, S2a, S3a angeordnet ist, die in der Regel aus einer Linse oder einer Linsenanordnung gebildet ist. Von den Lichtsendern S1, S2, S3 wird jeweils ein Lichtstrahl L1a, L2a, L3a ausgesendet, welche jeweils auf eine Grenzfläche F fallen und dort in einen Lichtstrahl L1b, L2b, L3b reflektiert werden. Die Lichtsender S1, S2, S3 sind dabei derart ausgebildet, dass sie einen kollimierten Lichtstrahl L1a, L2a, L3a aussenden, wozu das Sendeelement beispielsweise als Single Point Diode, VCSEL (Vertical-Cavity Surface-Emitting Laser) oder Laserdiode mit einer entsprechenden Kollimationsoptik ausgebildet sind.

Dem ersten Lichtsender S1 ist ein erster Lichtempfänger E1, dem zweiten Lichtsender S2 ein zweiter Lichtempfänger E2 und dem dritten Lichtsender S3 zugeordnet. Dadurch werden drei Lichtsender/Lichtempfängerpaare 1, 2, 3 gebildet. Dabei detektieren die Lichtempfänger E1, E2, E3 jeweils den reflektierten Lichtstrahl L1b, L2b, L3b, welcher durch Reflexion an der Grenzfläche F aus dem ausgesendeten Lichtstrahl L1a, L2a, L3a entsteht, der von dem zugehörigen Lichtsender S1, S2, S3 ausgesandt wurde. Die Lichtempfänger E1, E2, E3 weisen jeweils ein ortsauflösendes Empfangselement E1b, E2b, E3b, auf, welches beispielsweise als segmentierte Diode, als PSD (Position Sensitive Device) oder als Pixelarray ausgebildet sein kann. Vor den Empfangselementen E1b, E2b, E3b ist eine entsprechende Optik E1a, E2a, E3a angeordnet, welche in der Regel aus einer Linse oder einer Linsenanordnung besteht.

Mit den ortsauflösenden Empfangselementen E1b, E2b, E3b können positionsproportionale Empfangswerte für jedes Lichtsender/Lichtempfängerpaar 1, 2, 3 detektiert werden. Diese positionsproportionalen Empfangswerte sind abhängig von einem Abstand a zwischen der Grenzfläche F, an welchen der ausgesendete Lichtstrahl L1a, L2a, L3a reflektiert wird, und der optoelektronischen Sensoranordnung 10. Je nach Abstand a zwischen der optoelektronischen Sensoranordnung 10 und der Grenzfläche F ändert sich der Auftreffpunkt des reflektierten Lichtstrahls L1a, L2a, L3a auf dem entsprechenden ortsauflösenden Empfangselement E1b, E2b, E3b.

Die idealisierte Sensoranordnung 10 entspricht beispielsweise dem Zustand in der Produktion, in welcher die Lichtsender S1, S2, S3 und die Lichtempfänger E1, E2, E3 mit ihren entsprechenden Komponenten in der gewünschten relativen Position innerhalb eines Gehäuses der Sensoranordnung 10 zueinander angeordnet und optimal justiert werden können. Um überprüfen zu können, ob diese Anordnung der Bauteile in der Sensoranordnung 10 auch nach Transport oder Montage der Sensoranordnung 10 noch erhalten ist, werden für verschiedene Abstände a die positionsproportionalen Empfangswerte für jedes Lichtsender/Lichtempfängerpaar 1, 2, 3 detektiert, hinterlegt und aus diesem positionsproportionalen Empfangswerten die relativen Lagen der positionsproportionalen Empfangswerte jeweils zweier benachbarter Lichtsender/Lichtempfängerpaare, d. h. vorliegend die relativen Lagen der positionsproportionalen Empfangswerte der Lichtsender/Lichtempfängerpaare 1, 2 und die relativen Lagen der positionsproportionalen Empfangswerte der Lichtsender/Lichtempfängerpaare 2, 3 bestimmt und hinterlegt. Wurde die Sensoranordnung 10 transportiert und montiert, werden die aktuellen positionsproportionalen Empfangswerte detektiert, die relativen Lagen in der positionsproportionalen Empfangswerte benachbarter Lichtsender/Lichtempfängerpaare 1, 2 bzw. 2, 3 bestimmt und mit den hinterlegten Sollwerten der relativen Lagen verglichen.

Die Sensoranordnung 10 weist eine Auswerte- und Steuereinheit auf, welche die detektierten positionsproportionalen Empfangswerte detektiert, hinterlegt und entsprechend verarbeitet. Weiterhin ist die Auswerte- und Steuereinheit geeignet, die Lichtsender S1, S2, S3 gegebenenfalls auch derart anzusteuern, dass jeweils nur einer der Lichtsender S1, S2, S3 einen Lichtstrahl L1a, L2a, L3a aussendet. Insbesondere können zwischen den einzelnen von den Lichtsendern S1, S2, S3 ausgesandten Lichtimpulsen bestimmte Zeitintervalle festgelegt werden, in welchen keiner der Lichtsender S1, S2, S3 einen Lichtpuls aussendet, sondern gegebenenfalls weitere Testzyklen für die Sensoranordnung 10 durchgeführt werden können.

Durch das Hinterlegen von Sollwerten für die relativen Lagen der positionsproportionalen Empfangswerte der einzelnen Lichtsender/Lichtempfängerpaare 1, 2, 3 wird die Sicherheit und die Funktionsweise der Sensoranordnung 10 erhöht, da Verschmutzungen der Lichtsender S1, S2, S3 oder der Lichtempfänger E1, E2, E3 erkannt werden können und insbesondere auch ein Ausfall eines der Lichtsender S1, S2, S3 oder der Lichtempfänger E1, E2, E3 erkannt werden kann. Weiterhin werden Verschiebungen innerhalb der Sensoranordnung 10 der Lichtsender S1, S2, S3 oder der Lichtempfänger E1, E2, E3 erkannt und können gegebenenfalls korrigiert werden.

Figur 2 zeigt eine schematische Darstellung der Sensoranordnung 10 gemäß Figur 1, wobei gleiche Komponenten mit gleichen Bezugsziffern bezeichnet sind. In dieser Ausführungsform ist jedoch das zweite Lichtsender/Lichtempfängerpaar 2 nicht exakt ausgerichtet, so dass der von dem zweiten Lichtsender S2 ausgesendete Lichtstrahl L2a nicht parallel zu den von den beiden anderen Lichtsendern S1, S3 ausgesendeten Lichtstrahlen L1a, L3a, sondern im Winkel zu ihnen verläuft. Derartige Fehlstellungen der Lichtsender/Lichtempfängerpaare 1, 2, 3 zueinander können bereits bei der Montage auftreten und gegebenenfalls auch nicht behoben werden. Aber auch in diesem Fall ist es möglich, die positionsproportionalen Empfangswerte jedes Lichtsender/Lichtempfängerpaares 1, 2, 3 zu bestimmen und die relativen Lagen der positionsproportionalen Empfangswerte benachbarter Lichtsender/Lichtempfängerpaare 1, 2 bzw. 2, 3 zu bestimmen und zu hinterlegen.

Verlaufen jedoch die ausgesandten Lichtstrahlen L1a, L2a, L3a nicht sämtlich parallel zueinander, ist zu beachten, dass die Auflösung der optoelektronischen Sensoranordnung 10 von dem Abstand a zwischen der optoelektronischen Sensoranordnung 10 und der Grenzfläche F abhängt. Je größer der Abstand a zwischen der Sensoranordnung 10 und der Grenzfläche F ist, desto schlechter wird die Auflösung, da zwischen den beiden divergierenden Lichtstrahlen L2a, L3a oberhalb eines gewissen Abstands aₘₐₓ ein Objekt G zwischen den beiden Lichtstrahlen L2a, L3a hindurchtreten kann, ohne den Lichtweg zwischen der Sensoranordnung 10 und der Grenzfläche F zu unterbrechen. Die Größe des Objekts G, die wünschenswerterweise von der optoelektronischen Sensoranordnung 10 in dem Schutzbereich noch detektiert werden soll, bestimmt somit den maximalen Abstand aₘₐₓ zwischen der Sensoranordnung 10 und der Grenzfläche F. Dieser kann bereits während der Montage der Sensoranordnung 10 dadurch bestimmt werden, dass das Objekt G in jedem Abstand a zu der optoelektronischen Sensoranordnung 10 von mindestens zwei Lichtstrahlen L1a, L2a, L3a erfasst wird. Bei der Inbetriebnahme der Sensoranordnung 10 wird daher vorzugsweise zusätzlich der Abstand zwischen der Sensoranordnung 10 und der Grenzfläche F erfasst und mit dem hinterlegten zulässigen Maximalabstand aₘₐₓ verglichen, um eine zuverlässige Funktionsweise der Sensoranordnung 10 gewährleisten zu können.

### Bezugszeichenliste

- 10: Sensoranordnung

- S1: Lichtsender
- S1a: Optik
- S1b: Sendeelement
- S2: Lichtsender
- S2a: Optik
- S2b: Sendeelement
- S3: Lichtsender
- S3a: Optik
- S3b: Sendeelement

- E1: Lichtempfänger
- E1a: Optik
- E1b: Empfangselement
- E2: Lichtempfänger
- E2a: Optik
- E2b: Empfangselement
- E3: Lichtempfänger
- E3a: Optik
- E3b: Empfangselement

- L1a: ausgesendeter Lichtstrahl
- L2a: ausgesendeter Lichtstrahl
- L3a: ausgesendeter Lichtstrahl

- L1b: reflektierter Lichtstrahl
- L2b: reflektierter Lichtstrahl
- L3b: reflektierter Lichtstrahl

- F: Grenzfläche

- a: Abstand
- aₘₐₓ: Abstand

- G: Objekt

- 1: Lichtsender/Lichtempfänger-Paar
- 2: Lichtsender/Lichtempfänger-Paar
- 3: Lichtsender/Lichtempfänger-Paar

## Patentansprüche

1. Verfahren zur Überprüfung der Funktionsweise und/oder Justierung einer optoelektronischen Sensoranordnung (10) mit wenigstens zwei Lichtsendern (S1, S2, S3), denen jeweils ein Lichtempfänger zugeordnet ist, wobei die Lichtempfänger (E1, E2, E3) jeweils als ortsauflösende Lichtempfänger (E1, E2, E3) ausgebildet sind, und wobei jeweils der Lichtsender (S1, S2, S3) und der zugehörige Lichtempfänger (E1, E2, E3) derart zueinander angeordnet sind, dass ein von dem Lichtsender (S1, S2, S3) ausgesendeter Lichtstrahl (L1a, L2a, L3a) nach Reflektion an einer Grenzfläche (F) vom zugehörigen Lichtempfänger (E1, E2, E3) detektierbar ist, mit den Schritten:
a)Hinterlegen eines maximal zulässigen Abstandes (aₘₐₓ) zwischen der optoelektronischen Sensoranordnung (10) und der Grenzfläche (F), welcher **dadurch** ermittelt wird, dass ein Objekt (G) in jedem Abstand (a) zu der optoelektronischen Sensoranordnung (10) von mindestens zwei Lichtstrahlen (L1a, L2a, L3a) erfasst wird,
b) Detektieren der aktuellen positionsproportionalen Empfangswerte für jeden Lichtsender (S1, S2, S3) und den zugehörigen Lichtempfänger (E1, E2, E3),
c) Bestimmen der aktuellen relativen Lagen der Empfangswerte jeweils zweier benachbarter Lichtsender (S1, S2, S3),
d) Vergleichen der aktuellen relativen Lagen der Empfangswerte mit hinterlegten Sollwerten der relativen Lagen.

2. Verfahren nach Anspruch 1,
**dadurch gekennzeichnet, dass** die Sollwerte der relativen Lagen für einen definierten Abstand (a) zwischen den Lichtsendern (S1, S2, S3) und der Grenzfläche (F) durch folgende Schritte, vorzugsweise während der Produktion der optoelektronischen Sensoranordnung, ermittelt werden:
e) Detektieren der positionsproportionalen Empfangswerte für jeden Lichtsender (S1, S2, S3) und den zugehörigen Lichtempfänger (E1, E2, E3) für den definierten Abstand (a) zwischen der optoelektronischen Sensoranordnung und der Grenzfläche (F),
f) Hinterlegen der detektierten Empfangswerte als Sollempfangswerte,
g) Bestimmen der relativen Lagen der Empfangswerte jeweils zweier benachbarter Lichtsender (S1, S2, S3) und
h) Hinterlegen der bestimmten relativen Lagen als Sollwerte der relativen Lagen.

3. Verfahren nach Anspruch 1 oder 2,
**dadurch gekennzeichnet, dass** die Ermittlung der Sollwerte der relativen Lagen für mehrere unterschiedliche Abstände (a) zwischen der optoelektronischen Sensoranordnung (10) und der Grenzfläche (F) erfolgt.

4. Verfahren nach einem der vorhergehenden Ansprüche,
**dadurch gekennzeichnet, dass** die Schritte b) bis d) vor jeder Inbetriebnahme der optoelektronischen Sensoranordnung (10) und/oder regelmäßig während des Betriebs durchgeführt werden.

5. Optoelektronische Sensoranordnung (10) mit wenigstens zwei Lichtsendern (S1, S2, S3), denen jeweils ein Lichtempfänger (E1, E2, E3) zugeordnet ist, wobei die Lichtempfänger (E1, E2, E3) jeweils als ortsauflösende Lichtempfänger ausgebildet sind, und wobei jeweils der Lichtsender (S1, S2, S3) und der zugehörige Lichtempfänger (E1, E2, E3) derart zueinander angeordnet sind, dass ein von dem Lichtsender (S1, S2, S3) ausgesendter Lichtstrahl (L1a, L2a, L3a) nach Reflektion an einer Grenzfläche (F) vom zugehörigen Lichtempfänger (E1, E2, E3) detektierbar ist, welche eine Auswerte- und Speichereinheit aufweist, welche geeignet ist, einen maximal zulässigen Abstand (aₘₐₓ) zwischen der optoelektronischen Sensoranordnung (10) und der Grenzfläche (F) **dadurch** zu ermitteln, dass ein Objekt (G) in jedem Abstand (a) zu der optoelektronischen Sensoranordnung (10) von mindestens zwei Lichtstrahlen (L1a, L2a, L3a) erfasst wird, und den ermittelten Abstand (aₘₐₓ) zu hinterlegen, die aktuellen positionsproportionalen Empfangswerte für jeden Lichtsender (S1, S2, S3) und den zugehörigen Lichtempfänger (E1, E2, E3) zu detektieren, die aktuellen relativen Lagen der Empfangswerte jeweils zweier benachbarter Lichtsender (S1, S2, S3) zu bestimmen und die aktuellen relativen Lagen der Empfangswerte mit in der Auswerte- und Speichereinheit hinterlegten Sollwerten der relativen Lagen zu vergleichen.

6. Optoelektronische Sensoranordnung nach Anspruch 5,
**dadurch gekennzeichnet, dass** die Lichtsender (S1, S2, S3) einen kollimierten Lichtstrahl (L1a, L2a, L3a) aussenden.

7. Optoelektronische Sensoranordnung nach Anspruch 5 oder 6,
**dadurch gekennzeichnet, dass** die Lichtsender (S1, S2, S3) Licht im sichtbaren Bereich aussenden.

8. Optoelektronische Sensoranordnung nach einem der Ansprüche 5 bis 7,
**dadurch gekennzeichnet, dass** die Lichtempfänger (E1, E2, E3) als segmentierte Diode oder Pixelarray ausgebildet sind.

9. Optoelektronische Sensoranordnung nach einem Ansprüche 5 bis 8,
**dadurch gekennzeichnet, dass** eine Steuereinheit vorhanden ist, welche geeignet ist, die Lichtsender (S1, S2, S3) derart anzusteuern, dass die Lichtsender (s1, S2, S3) zeitlich versetzt zueinander einen Lichtstrahl (L1a, L2a, L3a) aussenden.

## Claims

1. Method for monitoring the functioning and/or adjustment of an optoelectronic sensor arrangement (10) with at least two light transmitters (S1, S2, S3), assigned to each of which is a light receiver, wherein each light receiver (E1, E2, E3) is designed as a location-resolving light receiver and wherein each of the light transmitters (S1, S2, S3) and the corresponding light receivers (E1, E2, E3) are so positioned relative to each other that a beam of light (L1a, L2a, . L3a) emitted from the light transmitter (S1, S2, S3) can be detected by the corresponding light receiver (E1, E2, E3) after being reflected by a boundary surface (F), with the following steps:
a) storing a maximum permitted distance (aₘₐₓ) between the optoelectronic sensor arrangement (10) and the boundary surface (F), which is determined by an object (G) being recorded at every distance (a) from the optoelectronic sensor arrangement (10) by at least two light beams (L1a, L2a, L3a),
b) detecting the current position-proportional reception values for each light transmitter (S1, S2, S3) and the corresponding light receiver (E1, E2, E3),
c) determining the current relative positions for the reception values of any two adjacent light transmitters (S1, S2, S3),
d) comparing the current relative positions for the reception values with stored reference values for the relative positions.

2. Method according to claim 1,
**characterised in that**
the reference values for the relative positions are determined for a defined distance (a) between the light transmitters (S1, S2, S3) and the boundary surface (F) through the following steps, preferably during the manufacture of the optoelectronic sensor arrangement:
e) detecting the position-proportional reception values for each light transmitter (S1, S2, S3) and the corresponding light receiver (E1, E2, E3) for the defmed distance (a) between the optoelectronic sensor arrangement and the boundary surface (F),
f) storing the detected reception values as reference reception values,
g) determining the relative positions for the reception values of any two adjacent light transmitters (S1, S2, S3), and
h) storing the determined relative positions as reference values for the relative positions.

3. Method according to claim 1. or 2, **characterised in that** the reference values for the relative positions are determined for several different distances (a) between the optoelectronic sensor arrangement (10) and the boundary surface (F).

4. Method according to one of the preceding claims, **characterised in that** steps b) to d) are performed before each start-up of the optoelectronic sensor arrangement (10) and/or at regular intervals during operation.

5. Optoelectronic sensor arrangement (10) with at least two light transmitters (S1, S2, S3), assigned to each of which is a light receiver (E1, E2, E3), wherein the light receivers (E1, E2, E3) are in each case designed as location-resolving light receivers, and wherein in each case the light transmitter (S1, S2, S3) and the corresponding light receiver (E1, E2, E3) are so positioned relative to each other that a beam of light (L1a, L2a, L3a) emitted by the light transmitter (S1, S2, S3) can, after being reflected by a boundary surface (F), be detected by the corresponding light receiver (E1, E2, E3), which [sensor arrangement] has an evaluation and storage unit that is suitable for determining a maximal permitted distance (aₘₐₓ) between the Optoelectronic sensor arrangement (10) and the boundary surface (F), in that an object (G) is recorded at every distance (a) from the optoelectronic sensor arrangement (10) by at least two beams of light (L1a, L2a, L3a), and for storing the established distance (aₘₐₓ), detecting the current position-proportional reception values for each light transmitter (S1, S2, S3) and corresponding light receiver (E1, E2, E3), determining the current relative positions for the reception values of any two adjacent light transmitters (S1, S2, S3), and comparing the current relative positions for the reception values with reference values for the relative positions that are stored in the evaluation and storage unit.

6. Optoelectronic sensor arrangement according to claim 5, **characterised in that** the light transmitters (S1, S2, S3) emit a collimated beam of light (L1a, L2a, L3a).

7. Optoelectronic sensor arrangement according to claim 5 or 6, **characterised in that** the light transmitters S1, S2, S3) emit light in the visible spectrum.

8. Optoelectronic sensor arrangement according to one of claims 5 to 7, **characterised in that** the light receivers (E1, E2, E3) are designed as segmented diodes or pixel arrays.

9. Optoelectronic sensor arrangement according to one of claims 5 to 8, **characterised in that** a control unit is provided which is suitable for controlling the light transmitters (S1, S2, S3) in such a way that the light transmitters (S1, S2, S3) emit a beam of light (L1a, L2a, L3a) in a manner that is staggered over time relative to one another.

## Revendications

1. Procédé de contrôle du fonctionnement et/ou d'ajustage d'un dispositif de capteur optoélectronique (10) comprenant au moins deux photoémetteurs (S1, S2, S3) auxquels est associé chaque fois un photorécepteur,
les photorécepteurs (E1, E2, E3) sont réalisés chacun comme photorécepteur de résolution de localisation (E1, E2, E3), et
chaque photoémetteur (S1, S2, S3) et le photorécepteur (E1, E2, E3) correspondant, sont associés pour qu'un faisceau lumineux (L1a, L2a, L3a) émis par l'un des photoémetteurs (S1, S2, S3), soit détecté par le photorécepteur associé (E1, E2, E3) après réflexion sur une surface limite (F),
procédé comprenant les étapes suivantes :
a) enregistrement d'un écart maximum autorisé (aₘₐₓ) entre le dispositif de capteur optoélectronique (10) et la surface limite (F), distance que l'on détermine en saisissant un objet (G) à chaque distance (a) du dispositif de capteur optoélectronique (10) avec au moins deux faisceaux lumineux (L1a, L2a, L3a),
b) détection des valeurs de réception actuelles proportionnelles à la position pour chaque photoémetteur (S1, S2, S3) et des photorécepteurs (E1, E2, E3) correspondants,
c) détermination de la position relative actuelle des valeurs de réception chaque fois de deux photoémetteurs voisins (S1, S2, S3),
d) comparaison des positions relatives actuelles des valeurs de réception et des valeurs de consigne enregistrées pour des positions relatives.

2. Procédé selon la revendication 1,
**caractérisé en ce qu'**
on détermine les valeurs de consigne des positions relatives pour une distance définie (a) entre les photoémetteurs (S1, S2, S3) et la surface limite (F) par les étapes suivantes, de préférence pendant la production du dispositif de capteur optoélectronique :
e) détection des valeurs de réception proportionnelles à la position pour chaque photoémetteur (S1, S2, S3) et des photorécepteurs (E1, E2, E3) correspondants pour la distance définie (a) entre le dispositif de capteur optoélectronique et la surface limite (F),
f) enregistrement des valeurs de réception détectées comme valeurs de réception de consigne,
g) détermination des positions relatives des valeurs de réception de chaque fois deux photoémetteurs (S1, S2, S3) voisins, et
h) enregistrement des positions relatives déterminées comme valeurs de consigne des positions relatives.

3. Procédé selon la revendication 1 ou 2,
**caractérisé en ce qu'**
on détermine les valeurs de consigne des positions relatives pour plusieurs distances différentes (a) entre le dispositif de capteur optoélectronique (10) et la surface limite (F).

4. Procédé selon les revendications .précédentes,
**caractérisé en ce qu'**
on effectue les étapes b)...d) avant chaque mise en route du dispositif de capteur optoélectronique (10) et/ ou régulièrement pendant le fonctionnement.

5. Dispositif de capteur optoélectronique (10) comportant au moins deux photoémetteurs (S1, S2, S3) auxquels est associé chaque fois un photorécepteur (E1, E2, E3),
les photorécepteurs (E1, E2, E3) sont réalisés chacun comme photorécepteur de résolution de localisation, et
chaque photoémetteur (S1, S2, S3) et le photorécepteur (E1, E2, E3) correspondant sont associés de façon qu'un faisceau lumineux (L1a, L2a, L3a) émis par le photoémetteur (S1, S2, S3), après réflexion sur une surface limite (F) puisse être détecté par le photorécepteur (E1 , E2, E3) correspondant,
le dispositif comprend une unité d'exploitation et de mémoire permettant de déterminer une distance maximale autorisée (aₘₐₓ) entre le dispositif de capteur optoélectronique (10) et la surface limite (F),
en ce qu'on saisit un objet (G) à chaque distance (a) du dispositif de capteur optoélectronique (10) avec au moins deux faisceaux lumineux (L1a, L2a, L3a), et
on enregistre la distance déterminée (aₘₐₓ), on détecte les valeurs de réception proportionnelles à la position actuelle pour chaque photoémetteur (S1, S2, S3) et des photorécepteurs (E1, E2, E3) correspondants, on détermine les positions relatives actuelles des valeurs de réception de chaque fois deux photoémetteurs voisins (S1, S2, S3), et on compare les positions relatives actuelles des valeurs de réception aux valeurs de consigne des positions relatives enregistrées dans l'unité d'exploitation et de mémoire.

6. Dispositif de capteur optoélectronique selon la revendication 5,
**caractérisé en ce que**
les photoémetteurs (S1, S2, S3) émettent un faisceau lumineux collimaté (L1a, L2a, L3a).

7. Dispositif de capteur optoélectronique selon la revendication 5 ou 6,
**caractérisé en ce que**
les photoémetteurs (S1, S2, S3) émettent de la lumière dans le domaine visible.

8. Dispositif de capteur optoélectronique selon les revendications 5 à 7,
**caractérisé en ce que**
les photoémetteurs (E1, E2, E3) sont réalisés sous la forme de diodes segmentées ou d'un réseau de pixels.

9. Dispositif de capteur optoélectronique selon les revendications 5 à 8,
**caractérisé par**
une unité de commande permettant de commander des photoémetteurs (S1, S2, S3) de façon que les photoémetteurs (S1, S2, S3) émettent de manière décalée dans le temps, un faisceau lumineux (L1a, L2a, L3a).
